# FASCICULE DE BREVET EUROPEEN

(11) **EP 1 330 091 B1**
(45) Date de publication et mention de la délivrance du brevet: **11.07.2012**
(21) Numéro de dépôt: 03354004.8
(22) Date de dépôt: 22.01.2003
(51) Int. Cl.: H04L 27/26

(54) **Procédé de sélection d'une position d'une fenêtre FFT dans un récepteur COFDM**
Verfahren zur Selektion einer Position eines FFT-Fensters in einem COFDM-Empfänger
Method of selecting a position of a FFT window in a COFDM receiver

(30) Priorité: 22.01.2002 FR 0200768
(43) Date de publication de la demande: 23.07.2003
(73) Titulaire: STMicroelectronics SA, 92120 Montrouge (FR)
(72) Inventeur: Alcouffe, Nicole, 38000 Grenoble (FR)
(74) Mandataire: de Beaumont, Michel

(56) Documents cités:
- EP-A- 0 895 388
- WO-A-01/69878
- US-B1- 6 330 293

## Description

La présente invention concerne un démodulateur de type COFDM ("Coded Orthogonal Frequency Division Multiplex" ou multiplexage par division de fréquence orthogonal codé) ou analogue.

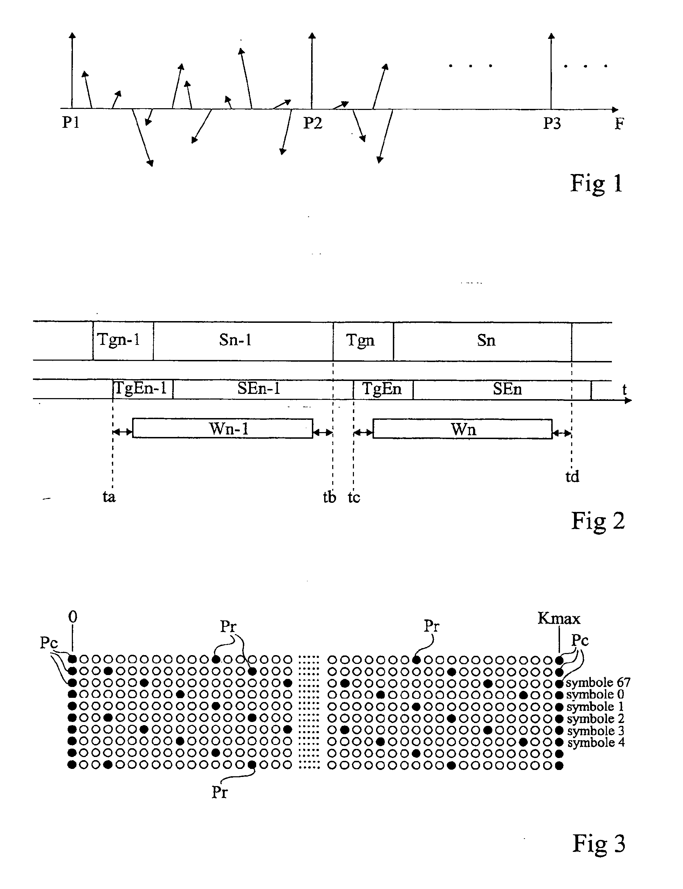

La figure 1 est destinée à illustrer le principe d'une modulation COFDM. Des paquets de données à émettre sont mis sous la forme de N coefficients complexes associés à N fréquences (ou porteuses) respectives. Le nombre N des fréquences est égal par exemple à 1705 pour le mode dit "2K" et à 6817 pour le mode dit "8K", en transmission herzienne de télévision numérique. Chaque coefficient complexe correspond à un vecteur qui est illustré en figure 1 comme partant d'un axe des fréquences en un point indiquant la fréquence associée au coefficient.

L'ensemble de ces N coefficients est traité par transformée de Fourier rapide inverse (IFFT), ce qui produit un "symbole" constitué d'une somme de porteuses modulées, chaque porteuse ayant une amplitude et une phase déterminées par le coefficient complexe associé. Le symbole ainsi généré est émis.

De manière classique, en transmission herzienne, la largeur du canal d'émission est de 6, 7 ou 8 MHz et chaque porteuse est séparée de la suivante par un écart de fréquence Δf = 1/Tu. Tu est la durée d'émission d'un symbole et est appelée durée utile. La durée utile est de l'ordre de 224 µs en mode 2K et 896 µs en mode 8K, pour une bande passante de 8MHz.

A la réception, un récepteur fait subir au symbole le traitement inverse, c'est-à-dire principalement une transformée de Fourier rapide (FFT) pour reconstituer les coefficients complexes de départ.

Comme cela est représenté en figure 1, certains vecteurs P1, P2, P3... régulièrement répartis ont une valeur constante connue. Ces vecteurs, ou les porteuses correspondantes, sont appelés pilotes. Ils servent à refléter les distorsions subies par le signal transmis et par l'information qu'ils donnent sur la réponse du canal, ils permettent de corriger les vecteurs inconnus situés entre les pilotes.

La figure 2 illustre une transmission de plusieurs symboles successifs Sn-1, Sn... Comme cela est représenté, chacun de ces symboles est précédé d'un intervalle de garde Tgn-1, Tgn qui est une recopie d'une partie de la fin du symbole correspondant. Les intervalles de garde sont souvent définis par une fraction de la durée utile Tu. Des valeurs classiques de l'intervalle de garde sont Tu/32, Tu/16, Tu/8 ou Tu/4.

Les intervalles de garde servent à éviter des distorsions de modulation inter-symbole provoquées par un écho de la transmission. La figure 2 représente également un écho SEn-1, TgEn-1... du signal émis. Cet écho est retardé par rapport au signal principal d'une durée inférieure à celle d'un intervalle de garde Tg.

Chaque symbole S est normalement analysé par le circuit FFT du récepteur dans une fenêtre W de même longueur que le symbole. S'il n'y avait pas d'intervalle de garde, une fenêtre d'analyse W coïncidant avec un symbole du signal principal serait à cheval sur deux symboles du signal d'écho. Ceci provoquerait une erreur difficile à corriger dans le calcul de la transformée de Fourier FFT.

L'intervalle de garde Tg, pourvu qu'il soit supérieur au retard ou à l'avance de l'écho, offre une marge de réglage de la fenêtre d'analyse W pour qu'elle ne coïncide qu'avec des portions appartenant au même symbole, aussi bien dans le signal principal que dans l'écho. Le fait qu'une fenêtre d'analyse soit à cheval sur un symbole et son intervalle de garde introduit un déphasage qui est corrigé à l'aide des pilotes susmentionnés.

En figure 2, le symbole Sn-1 doit être analysé dans une fenêtre Wn-1 pouvant s'étendre de l'instant ta, correspondant au début de l'intervalle de garde de l'écho TgEn-1, à l'instant tb correspondant à la fin du symbole Sn-1. De même, le symbole Sn doit être analysé dans une fenêtre Wn pouvant s'étendre de l'instant tc, correspondant au début de l'intervalle de garde de l'écho TgEn, à l'instant td correspondant à la fin du symbole Sn.

Le positionnement des fenêtres d'analyse W est réalisé de manière classique à l'aide des pilotes contenus dans les symboles, comme, par exemple, décrit dans EP-A-0 895 388 ou US-A-6 330 293.

La figure 3 représente schématiquement la place de pilotes dans les symboles. Les symboles sont groupés en trames de 68 symboles, de façon classique en transmission hertzienne de télévision numérique (norme ETSI EN 300 744, V1.4.1).

En figure 3, chaque ligne représente un symbole et chaque case représente la position d'une porteuse. Les porteuses sont définies comme allant d'une position 0 à une position Kmax, Kmax étant égal à 1704 en mode 2K et 6816 en mode 8K. En effet, seule une partie des fréquences possibles est utilisée, notamment par suite de risque de pertes en bordure de canal. Les pilotes sont de deux types.

D'une part, il y a, dans chaque symbole, des pilotes continus Pc. Les pilotes continus correspondent à des fréquences particulières réparties dans le canal. Dans la norme ETSI évoquée ci-dessus, il y a en 45 en mode 2K et 177 en mode 8K. Les pilotes continus sont présents dans tous les symboles et occupent toujours la même position en fréquence. En figure 3, seuls les pilotes continus correspondants aux positions 0 et Kmax ont été représentés.

D'autre part, il y a, dans chaque symbole, des pilotes Pr dits "répartis" ("scattered pilots" en anglais), qui sont disposés toutes les 12 porteuses, et décalés de trois positions entre deux symboles successifs. Ainsi, tous les quatre symboles, on retrouve la même disposition des pilotes répartis Pr.

Les pilotes continus et répartis, d'amplitude constante à l'émission, sont utilisés pour connaître la réponse impulsionnelle du canal et par suite, dans la plupart des circuits connus, positionner finement la fenêtre d'analyse W.

Pour se faire, au récepteur, le signal reçu complexe, temporel, après avoir été mis en bande de base, est fourni à un module de transformée de Fourier rapide fournissant le symbole dans le domaine fréquentiel. Les pilotes sont prélevés de ce symbole. Les pilotes prélevés permettent l'estimation fréquentielle du canal qui, après avoir subi une transformée de Fourrier inverse, fournit la réponse impulsionnelle du canal. La réponse impulsionnelle du canal est utilisée pour positionner finement la fenêtre.

Un problème existe du fait que les pilotes ne fournissent qu'une description incomplète du canal. En effet, une prise en compte de plusieurs symboles successifs (au moins quatre) ne permet d'avoir une image du canal que tous les trois points. Il en résulte que l'estimation de la réponse impulsionnelle du canal obtenue à partir des pilotes présente une périodisation de période égale à la durée utile Tu divisée par trois. En conséquence, si l'intervalle de garde Tg est relativement grand par rapport à la durée utile, il n'est plus possible de positionner la fenêtre de manière optimale. Cela est le cas lorsque Tg est égal à Tu/4. Une modulation inter-symbole, souvent accompagnée d'une perte de données, peut alors intervenir.

Une solution à ce problème est d'analyser les données reçues après décodage complet et de déterminer leur taux d'erreur BER ("Bit Error Rate" en anglais). L'emplacement de la fenêtre est alors modifié par tâtonnements jusqu'à ce que le taux d'erreur soit acceptable. Un problème de cette façon de faire est son imprécision et sa lenteur. En effet, il faut attendre le décodage complet des données, ce qui peut être très long. En général, avec la solution ci-dessus, une perte de données se produit de façon quasi-inévitable.

Un objet de la présente invention est de prévoir un démodulateur COFDM ou analogue avec un positionnement optimal de la fenêtre d'analyse FFT.

Un autre objet de la présente invention est de prévoir un démodulateur COFDM ou analogue avec un re-positionnement rapide de la fenêtre d'analyse FFT.

Pour atteindre ces objets, la présente invention prévoit un démodulateur de type COFDM comprenant un circuit de transformée de Fourier rapide d'analyse d'un signal reçu dans une fenêtre correspondant à un symbole, chaque symbole véhiculant plusieurs porteuses modulées en phase et/ou en amplitude, dont certaines sont des porteuses de signalisation, et un circuit de positionnement de ladite fenêtre. Le circuit de positionnement de ladite fenêtre est propre à utiliser les porteuses de signalisation non démodulées.

Selon un mode de réalisation de la présente invention, le circuit de positionnement de ladite fenêtre comprend un module de traitement des porteuses de signalisation et un module de réglage de fenêtre couplé au module de traitement des porteuses de signalisation.

Selon un mode de réalisation de la présente invention, le module de traitement des porteuses de signalisation est propre à élaborer un critère de qualité à partir des porteuses de signalisation.

Selon un mode de réalisation de la présente invention, le démodulateur comporte un ou plusieurs premiers modules de correction couplés au circuit de transformée de Fourier rapide et commandés à partir dudit critère de qualité.

Selon un mode de réalisation de la présente invention, le circuit de positionnement de ladite fenêtre comprend au moins un circuit comportant un ou plusieurs deuxièmes modules de correction de même fonction que le ou les premiers modules de correction et couplés au module de traitement des porteuses de signalisation, lui-même couplé à un module de calcul couplé au module de réglage de fenêtre et propre à commander le ou les deuxièmes modules de correction.

Selon un mode de réalisation de la présente invention, le module de traitement des porteuses de signalisation comprend :
un module extracteur des porteuses de signalisation d'un symbole reçu,
un soustracteur propre à soustraire, aux nombres représentatifs des porteuses de signalisation extraites, des nombres représentatifs d'une séquence de porteuses de signalisation émises dans le symbole,
un premier module de calcul propre à fournir une amplitude associée à la différence fournie par ledit soustracteur,
un premier sommateur propre à fournir, pour chaque symbole, la somme des amplitudes fournies par ledit premier moyen de calcul,
un additionneur propre à additionner, aux nombres représentatifs des porteuses de signalisation extraites, les nombres représentatifs d'une séquence de porteuses de signalisation émises dans le symbole,
un deuxième module de calcul propre à fournir une amplitude associée à la somme fournie par ledit additionneur, et
un deuxième sommateur propre à fournir, pour chaque symbole, la somme des amplitudes fournies par ledit deuxième moyen de calcul.

Selon un mode de réalisation de la présente invention, le module de traitement des porteuses de signalisation comprend un troisième module de calcul couplé au premier et deuxième sommateurs propre à fournir ledit critère de qualité, ledit critère de qualité étant un nombre représentatif de la somme la plus petite parmi les sommes fournies par les premier et deuxième sommateurs.

Selon un mode de réalisation de la présente invention, le module de traitement comporte un premier module d'écrêtage couplé au premier sommateur et au troisième module de calcul et un second module d'écrêtage couplé au deuxième sommateur et au troisième module de calcul.

Selon un mode de réalisation de la présente invention, le module de traitement des porteuses de signalisation comprend :
un module de fourniture de N "1" consécutifs, N correspondant au nombre de porteuses présentes dans un symbole,
un module de modification des "1" fournis par le module de fourniture de "1", pour remplacer chaque "1" correspondant à la position d'une porteuse de signalisation dans le symbole par un nombre représentatif de la porteuse de signalisation, la première porteuse de signalisation correspondant à un "1", et
un module d'extraction de nombres correspondant à l'emplacement des porteuses de signalisation dans le symbole, pour fournir des nombres représentatifs d'une séquence de porteuses de signalisation émises dans le symbole.

La présente invention prévoit aussi un procédé de démodulation de type COFDM comprenant une étape de transformation par transformée de Fourier rapide analysant un signal reçu dans une fenêtre correspondant à un symbole, chaque symbole véhiculant plusieurs porteuses modulées en phase et/ou en amplitude, dont certaines sont des porteuses de signalisation, et une étape de positionnement de ladite fenêtre. L'étape de positionnement de ladite fenêtre comprend une étape d'élaboration d'un critère de qualité à partir des porteuses de signalisation non démodulées.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente des porteuses modulées en phase et en amplitude dans un système de transmission COFDM ;
la figure 2, précédemment décrite, représente des signaux reçus par un démodulateur COFDM et des fenêtres d'analyse FFT des signaux ;
la figure 3, précédemment décrite, représente schématiquement la position de pilotes dans des symboles ;
la figure 4 représente une porteuse reçue de type TPS ;
la figure 5 représente un démodulateur selon la présente invention ;
la figure 6 représente une partie d'un démodulateur selon la présente invention ; et
la figure 7 représente une partie d'un autre démodulateur selon la présente invention.

Pour positionner efficacement la fenêtre d'analyse de façon optimale, la présente invention utilise les porteuses de signalisation, dites "porteuses TPS", présentes dans le signal émis.

Les porteuses TPS ("Transmission Parameters Signaling" ou "signalisation des paramètres de transmission") sont des porteuses particulières réparties dans le spectre des fréquences disponibles. Les porteuses TPS contiennent des informations de codage ou de décodage. Par exemple, elles indiquent le type de modulation des porteuses, comme "QPSK", 64 QAM, 16 QAM, etc, le mode, 2K ou 8K, la valeur de l'intervalle de garde, le numéro de la trame, etc. Les porteuses TPS occupent toujours la même place dans les symboles. Dans chaque symbole, les porteuses TPS sont toutes identiques avant codage. Pour la transmission, les porteuses TPS sont codées avec un codage classique de type DBPSK, dans le but d'avoir une énergie de transmission sensiblement constante.

Dans la norme évoquée précédemment, il y a 17 porteuses TPS en mode 2K, et 68 en mode 8K. Les porteuses TPS occupent, dans le spectre de fréquence, des emplacements situés entre ceux des pilotes continus et des pilotes répartis. L'emploi, selon la présente invention, des porteuses TPS pour régler le positionnement de la fenêtre va permettre d'affiner ce positionnement et de le rendre optimal.

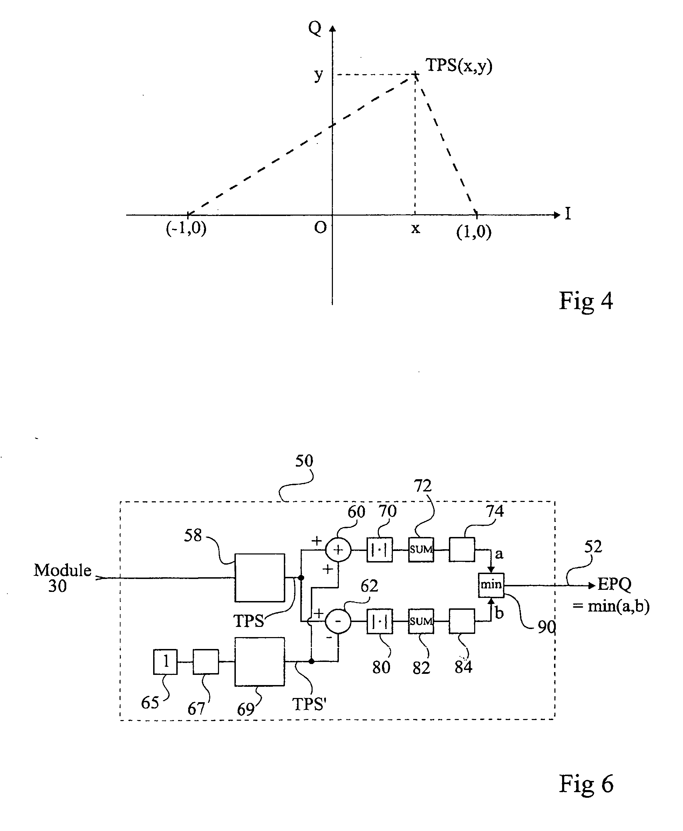

Du fait de leur codage, les porteuses TPS ne peuvent prendre que deux valeurs, et correspondre soit au nombre complexe (1,0), c'est-à-dire au nombre réel "1", soit au nombre complexe (-1,0), c'est-à-dire au nombre réel "-1". Comme les porteuses TPS d'un même symbole sont toutes identiques avant codage, si la première porteuse TPS d'un symbole correspond à (1,0), les valeurs des autres porteuses TPS du symbole sont déterminées. Il en est de même lorsque la première porteuse TPS du symbole correspond à (-1,0). Du fait de la transmission, les porteuses TPS reçues correspondent, elles, à un nombre complexe (x,y) ou x+iy dans un plan I,Q, I représentant les éléments en phase et Q les éléments en quadrature de la porteuse, comme cela est illustré en figure 4.

Selon la présente invention, un décodage des porteuses TPS et une mesure du bruit sur celles-ci permettent de définir un critère de qualité EPQ de la fenêtre et, plus généralement, de la démodulation. Le critère de qualité EPQ est utilisé notamment pour décaler la fenêtre, si besoin est, de façon à optimiser son positionnement. On notera que le calcul du critère de qualité EPQ n'utilise pas les valeurs démodulées des porteuses TPS.

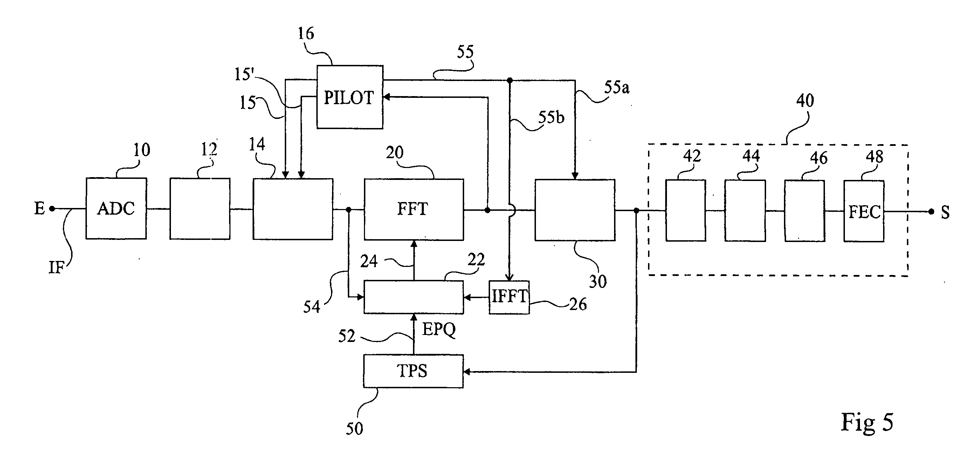

La figure 5 représente un exemple de démodulateur selon la présente invention. Le signal reçu comprend des pilotes continus, des pilotes répartis, des porteuses TPS et des porteuses de données.

En figure 5, une entrée E du démodulateur reçoit un signal IF de fréquence intermédiaire permettant un échantillonnage, par exemple 36 MHz. Le signal IF correspond au signal reçu après divers changements ou transpositions de fréquence.

L'entrée E est couplée à un convertisseur analogique-numérique 10 (ADC) qui numérise le signal d'entrée IF. Le convertisseur analogique-numérique 10 attaque un module 12 de changement de fréquence. Le module 12 fournit un signal sensiblement en bande de base, le spectre du signal en sortie du module 12 étant centré sur une fréquence sensiblement égale à zéro. Le module 12 est couplé à un module 14 permettant d'une part un réglage fin de la fréquence centrale du spectre du signal et, d'autre part, de fournir des échantillons temporels à des instants appropriés au traitement ultérieur. En sortie du module 14, le spectre du signal est centré sur une fréquence égale à 0 et le nombre et la position temporelle des échantillons sont adaptés à la transformation par transformée de Fourier qui a lieu dans le module suivant. Le module 14 est commandé par des liaisons 15 et 15' reliant le module 14 à un module 16 de traitement des pilotes continus et repartis.

La sortie du module 14 attaque un module 20 de transformée de Fourier rapide (FFT) qui fournit les fréquences correspondant à un symbole. Le module 20 est piloté par un module 22 qui fournit, par l'intermédiaire d'une liaison 24, un signal de réglage de la fenêtre d'analyse de la transformée de Fourier.

La sortie du module 20 est couplée au module 16 qui réalise l'extraction et le traitement des pilotes continus et répartis. Le module 16 fournit sur les liaisons 15 et 15' les signaux destinés à corriger la fréquence centrale du spectre et la fréquence d'échantillonnage du signal.

La sortie du module 20 attaque un module 30 dans lequel le signal est corrigé à l'aide d'une estimation de la réponse fréquentielle du canal. L'estimation de la réponse fréquentielle du canal est réalisée dans le module 16 à l'aide des pilotes. Cette estimation est fournie par le module 16 sur une liaison 55, dont une branche 55a est couplée au module 30. En sortie du module 30, le signal comprend les porteuses TPS, non démodulées, et les porteuses véhiculant les données, non démodulées également (par démodulation, on entend extraire les informations véhiculées par ces porteuses).

L'estimation de la réponse fréquentielle du canal, fournie par le module 16, alimente, par l'intermédiaire de la liaison 55 et d'une branche 55b de la liaison 55, un module 26 de transformée de Fourier inverse (IFFT), pour déterminer la réponse impulsionnelle du canal. Le module 26 fournit la réponse impulsionnelle du canal au module 22, pour ajuster dynamiquement le positionnement de la fenêtre d'analyse FFT.

Le traitement des porteuses véhiculant les données est assuré dans un circuit 40 de traitement et fourniture de données. Le circuit 40 a une structure classique et peut comporter, comme cela est représenté en figure 4, un module 42 de désentrelacement de symboles, un module 44 dit de "démappage", un module 46 de désentrelacement de bits, et un module 48 (FEC) de correction d'erreur. La sortie du module 48 constitue la sortie S du circuit 40 et du démodulateur et fournit des données correspondant aux données émises.

La sortie du module 30 attaque aussi un module 50 de traitement des porteuses TPS. Le module 50, dont un exemple de réalisation va être décrit en relation avec la figure 6, fournit un critère de qualité EPQ sur une liaison 52. Le critère de qualité attaque, directement ou non, le module 22 destiné à ajuster le réglage de la fenêtre d'analyse. En outre, le module 22 reçoit le signal de sortie du module 14 par une liaison 54, pour régler grossièrement la fenêtre d'analyse.

Un exemple de module 22 connu est par exemple présent dans le circuit intégré STV 0360 fabriqué par la demanderesse. Ce circuit intégré comporte un registre dit "de protection d'écho lointain" ("long echo protection") . Le contenu du registre de protection d'écho lointain sert à affiner le réglage de la fenêtre d'analyse FFT et est déterminé à partir du critère de qualité EPQ fourni par le module 50, après un éventuel traitement informatique. Par exemple, un microcontrôleur, interne ou externe au démodulateur, peut être couplé au module 22 pour recevoir le critère de qualité EPQ et modifier le contenu du registre de protection d'écho lointain afin de minimiser le critère de qualité. Lorsque le critère de qualité a une valeur faible, la fenêtre est bien positionnée et aucun ajustement n'est réalisé. Lorsque le critère de qualité a une forte valeur, un repositionnement adéquat de la fenêtre est réalisé.

Le microcontrôleur évoqué ci-dessus peut aussi réaliser des essais en modifiant périodiquement ou non le contenu du registre de protection d'écho lointain. Le microcontrôleur note alors les différentes valeurs du critère de qualité obtenues et commande le positionnement de la fenêtre d'analyse à l'aide de la commande ayant fourni la valeur minimale du critère de qualité.

On notera que, bien que cela ne soit pas détaillé ici, le module de correction 30 comprend en général des filtres dont le centrage est réalisé conjointement avec le positionnement de la fenêtre d'analyse FFT. Le critère EPQ, servant au positionnement de la fenêtre d'analyse FFT, peut aussi être utilisé pour le centrage éventuel de ces filtres.

Comme cela a été indiqué auparavant, la réponse du canal ne peut être connue avec certitude qu'un point d'échantillonnage sur trois. Comme les porteuses TPS sont à des emplacements situés entre les pilotes, l'indication fournie par les porteuses TPS est une indication qui porte sur des points intermédiaires de la séquence d'échantillonnage. En outre, la redondance et le codage des porteuses TPS rendent les porteuses TPS particulièrement robustes au bruit. Il résulte des remarques ci-dessus que l'ajustement de la fenêtre d'analyse FFT à l'aide des porteuses TPS est particulièrement efficace.

La demanderesse a réalisé de nombreux tests de simulation à l'aide d'échos intervenant avant le signal principal ("pré-écho", "precursive écho" en anglais) ou d'échos intervenant après le signal principal ("post-écho", "postcursive echo" en anglais). Les tests ont été réalisés avec des valeurs d'intervalle de garde variées, dont la valeur Tg = Tu/4, source d'ambiguïtés. Dans tous les cas, un positionnement de la fenêtre est réalisé rapidement et de façon optimale, et aucune donnée n'est perdue.

La figure 6 illustre un exemple avantageux de réalisation du module 50 de traitement des porteuses TPS. Le module 50 reçoit en entrée le signal en sortie du module 30. Ce signal comprend les porteuses TPS et les porteuses véhiculant les données.

Dans le module 50, le signal d'entrée est fourni à un module 58 qui extrait les porteuses TPS. Comme cela a été mentionné en relation avec la figure 4, une porteuse TPS reçue peut être représentée par un nombre complexe TPS = x+iy. Les nombres TPS sont fournis à un additionneur 60 et à un soustracteur 62.

L'additionneur 60 et le soustracteur 62 reçoivent en outre chacun une séquence de nombres TPS'. Les nombres TPS' sont déterminés de la manière suivante. Un module 65 approprié quelconque, par exemple un élément de mémorisation ou un registre, fournit séquentiellement un nombre de "1" égal au nombre de porteuses utilisées dans le mode de transmission utilisé (1705 en mode 2K et 6817 en mode 8K).

La sortie du module 65 attaque un module 67. Le module 67 modifie la suite numérique qui lui est fournie suivant une séquence PRBS définie par la norme ETSI évoquée ci-dessus. En sortie du module 67, se trouve une séquence de référence correspondant à la séquence des pilotes et des porteuses TPS émis.

La sortie du module 67 attaque un module 69. Le module 69 a pour fonction d'extraire, de la séquence transmise par le module 67, des nombres TPS' correspondant aux emplacements des porteuses TPS. Les nombres TPS', de valeur +1 ou -1, représentent une séquence théorique de nombres TPS correspondant à une transmission sans erreur et dans le cas où la première porteuse TPS du symbole correspond à la valeur 1.

Bien entendu, les modules 65, 67 et 69 peuvent être remplacés par un seul ou plusieurs autres modules appropriés. Par exemple, un module unique peut fournir directement la séquence souhaitée de nombres TPS'. On notera cependant que la structure de la figure 6 permet une certaine symétrisation du circuit, le module 69 correspondant au module 58, et que cette structure est facilement paramétrable en fonction du mode de fonctionnement.

L'additionneur 60 ajoute le nombre complexe TPS au nombre TPS' pour chacune des porteuses TPS. La sortie de l'additionneur 60 attaque un module 70. Le module 70 calcule la valeur absolue complexe de la somme TPS+TPS', définie par la somme de la valeur absolue de la partie réelle du nombre TPS+TPS' et de la valeur absolue de la partie imaginaire du nombre TPS+TPS'. A titre d'alternative, le module 70 peut réaliser le calcul de la distance quadratique entre les nombres TPS et TPS', ou le calcul d'une autre distance entre les nombres TPS ET TPS'.

Le module 70 est couplé à un module 72 (SUM). Le module 72 réalise, pour chaque symbole, la somme de toutes les valeurs fournies par le module 70. La sortie du module 72 attaque un module d'écrêtage 74 destiné à limiter la sortie du module 72 en cas de dépassement. Le module 74 fournit un nombre a. Par exemple, si la sortie du module 50 est prévue pour des nombres de 8 bits, le nombre a, en représentation binaire, est limité à huit "1" en cas de dépassement de cette valeur.

La sortie du soustracteur 62 alimente un module 80 de même fonction que le module 70. En figure 6, le module 80 réalise la valeur absolue complexe de la différence des nombres TPS et TPS'. Bien entendu, si le module 70 réalise un autre calcul, le module 80 réalise le même calcul que le module 70. La sortie du module 80 attaque un module 82 qui réalise la somme des valeurs absolues fournies par le module 80 pour toutes les porteuses TPS présentes dans un symbole. La sortie du module 82 attaque un module d'écrêtage 84 de même fonction que le module 74. Le module 84 fournit un nombre b pour chaque symbole.

Le nombre b est relié à la distance des porteuses TPS reçues à leur valeur théorique, si la première porteuse TPS du symbole correspond à un "1". De même, le nombre a est relié à la distance des porteuses TPS reçues à leur valeur théorique, si la première porteuse TPS du symbole correspond à un "-1", les séquences commençant par un "1" et un "-1" étant inverses l'une de l'autre. En effet, la somme TPS+TPS' peut être interprétée comme la différence TPS-(-TPS'), ce qui correspond à la distance du nombre TPS reçu au point (-1,0).

Bien entendu, le nombre a peut être calculé à partir d'une séquence de nombres TPS" correspondant à la séquence, dans un symbole, des nombres correspondant aux porteuses TPS lorsque la première porteuse TPS du symbole correspond à un "-1". Cela aurait conduit à une duplication des éléments 65, 67 et 69, opérant à partir d'une valeur "-1". Le fait, en figure 6, d'utiliser un additionneur 60 et un soustracteur 62 à partir d'une même séquence évite la duplication évoquée ci-dessus.

Les nombres a et b attaquent un module 90. Le module 90 analyse les nombres a et b et fournit un nombre min(a,b) égal à celui des nombres a ou b qui présente la valeur la plus faible. Le nombre min(a,b) est fourni en sortie du module 50 sur la liaison 52 en direction du module 22.

Le nombre min(a,b) correspond à la distance entre les porteuses TPS reçues et les porteuses TPS émises les plus probables. Ce nombre est une évaluation du bruit ou des erreurs affectant les porteuses TPS reçues. C'est ce nombre, min(a,b), qui, selon la présente invention, est utilisé comme critère de qualité EPQ pour modifier le positionnement de la fenêtre d'analyse FFT. Si le critère de qualité a une valeur faible, cela signifie que les porteuses TPS reçues sont proches des porteuses émises et la fenêtre est bien positionnée. Sinon, par exemple au-dessus d'un certain seuil, la valeur du critère de qualité pilote le positionnement de la fenêtre de façon à le rendre optimal.

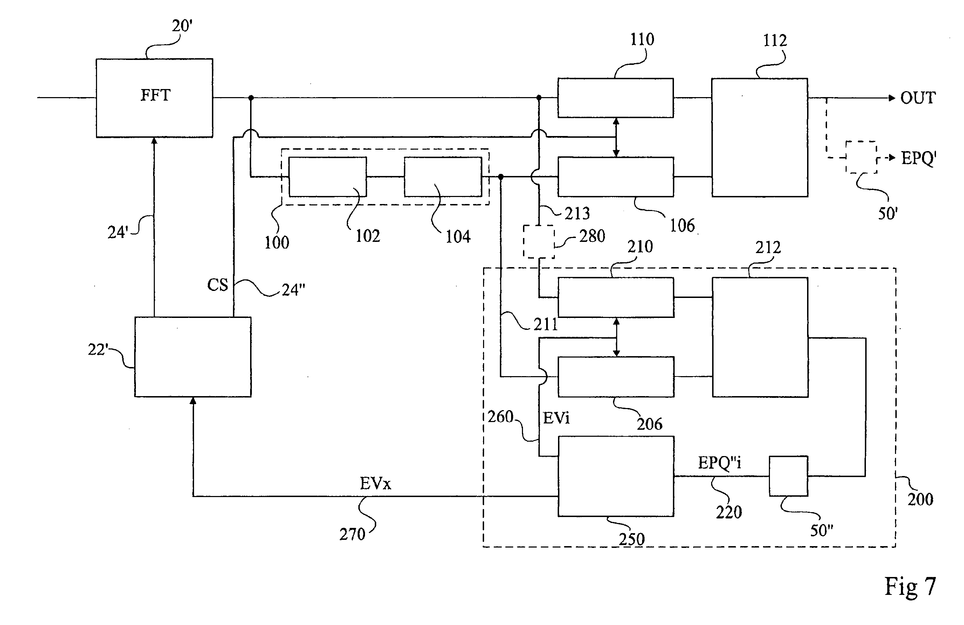

On va maintenant décrire un autre mode de réalisation de la présente invention en relation avec la figure 7, dans laquelle les éléments correspondant à ceux de la figure 5 ont été désignés par la même référence, suivie d'un ' ou d'un ".

La figure 7 illustre un démodulateur selon la présente invention dans lequel le réglage du positionnement fin de la fenêtre d'analyse de la transformée de Fourier est réalisé de façon automatique au niveau matériel par des modules présents dans le démodulateur. Ces modules permettent de réaliser des essais de réglage sans intervenir dans le traitement principal des données et de choisir le positionnement optimal de la fenêtre d'analyse FFT.

En figure 7, seuls les éléments du démodulateur nécessaires à l'exposé ci-après ont été représentés. Un signal à analyser, comme celui fourni par le module 14 de la figure 5, attaque un module de transformée de Fourier rapide FFT 20'.

Le signal issu du module 20' attaque un module 100 d'estimation fréquentielle du canal. Le module 100 comprend un module 102 destiné à extraire les pilotes continus et les pilotes répartis contenus dans le signal issu du module 20'. La sortie du module 102 attaque un module 104 de prédiction, c'est-à-dire d'estimation, fréquentielle du canal déterminée à partir des pilotes. En sortie du module 104 se trouve un signal correspondant à l'estimation fréquentielle du canal déterminée à partir des pilotes.

Le signal issu du module 104 attaque un module interpolateur 106. Le module interpolateur 106 réalise deux fonctions, une fonction d'interpolation à l'aide d'un filtre interpolateur et une fonction de centrage du filtre d'interpolation. Le centrage du filtre d'interpolation est commandé par un signal de commande de centrage CS circulant sur une ligne 24" provenant d'un module 22' que l'on décrira par la suite. Le filtrage du signal fourni par le module 104 permet d'obtenir, en sortie du module interpolateur 106, une information de canal estimée pour toutes les porteuses et repositionnée dans le temps.

Le signal issu du module 20' attaque également un module de centrage 110 qui repositionne ce signal dans le temps. Le centrage réalisé dans le module 110 est commandé par le signal de commande de centrage CS véhiculé sur la ligne 24" et est effectué de la même manière que le centrage réalisé dans le module 106. En sortie du module 110, on obtient un signal non corrigé quant aux déformations dues au canal, mais repositionnées dans le temps.

La sortie du module 110 et la sortie du module 106 attaquent un module correcteur 112. Le module correcteur 112 fournit, sur une sortie OUT, un signal comportant les porteuses TPS et les porteuses de données corrigées quant à leur déformation due à la réponse fréquentielle du canal. Par exemple, le module 112 peut réaliser la division complexe entre les signaux issus du module 110 et du module 106 de façon à obtenir des données repositionnées dans le temps de la même façon que les porteuses, le canal étant alors entièrement estimé.

Le signal présent sur la sortie OUT peut attaquer un circuit de traitement, comme le circuit 40 de la figure 5, pour la fourniture des données véhiculées par les porteuses de données.

De manière accessoire et représenté en pointillés, un module 50' de même fonction que le module 50 de la figure 5 peut être connecté à la sortie OUT. Le module 50' a pour but de calculer le critère de qualité, référencé ici EPQ', et de le fournir à l'extérieur du démodulateur, notamment à des fins de contrôle ou de vérification.

Pour simplifier la comparaison des figure 5 et figure 7, on notera que la fonction des modules 102 et 104 est réalisée par une partie du circuit 16 de la figure 5 et que la fonction du module 30 de la figure 5 est réalisée par les modules 106, 110 et 112 de la figure 7.

Les signaux fournis respectivement par le module 104 et le module 20' attaquent également une boucle d'essai 200 destinée à calculer diverses valeurs du critère de qualité EPQ. La boucle d'essai 200 comprend un module interpolateur 206, un module de centrage 210, un module correcteur 212, un module de détermination de critère de qualité 50" et un module de calcul 250.

Le signal fourni par le module 104 attaque le module interpolateur 206 par l'intermédiaire d'une ligne 211. Le module 206 est de même fonction que le module 106 et peut être de même constitution ou non (par exemple, le module 206 peut être de constitution simplifiée par rapport au module 106). Le module 206 réalise une interpolation et un centrage temporel du signal présent sur la ligne 211. Le centrage est effectué par le module 206 à l'aide d'un signal de commande de centrage EVi présent sur une ligne 260. Le module 206 fournit un signal correspondant à la réponse du canal estimée pour toutes les porteuses du signal.

Le module 210 reçoit le signal fourni par le module 20' par l'intermédiaire d'une ligne 213. Le module 210 est de même fonction que le module 110 et peut être de même constitution ou non. Le module 210 réalise une correction temporelle identique à celle réalisée dans le module 206. Le module 210 est commandé par le signal de commande de centrage EVi présent sur la ligne 260.

La sortie du module 206 et la sortie du module 210 attaquent le module correcteur 212. Le module 212 a la même fonction, le cas échéant la même constitution, que le module 112. En sortie du module 212 se trouve un signal comprenant les porteuses de signalisation TPS corrigées en ce qui concerne leurs déformations dues à la réponse fréquentielle du canal et repositionnées dans le temps à l'aide du signal de commande de centrage fourni par la ligne 260.

La sortie du module 212 attaque le module 50", pouvant être de même constitution que le module 50'. Le module 50" fournit, à partir des porteuses de signalisation présentes en sortie du module 212, un critère de qualité EPQ"i sur une ligne 220.

La sortie du module 50" attaque, par l'intermédiaire de la ligne 220, le module de calcul 250. Le module 250 calcule, à partir du critère EPQ"i, le signal de commande de centrage EVi destiné aux modules 206 et 210. Le signal EVi est fourni sur la ligne 260.

La boucle d'essai 200 peut être utilisée pour réaliser des cycles d'essais de la manière suivante. Lors d'un cycle d'essais, le module 250 fournit une première valeur de signal de commande de centrage EV1, désignée ci-après première valeur de centrage, aux modules 206 et 210. Les modules 206 et 210 fournissent alors des signaux corrigés temporellement à l'aide de la valeur de centrage EV1. Le module 50" calcule, pour la valeur de centrage EV1, un premier critère de qualité EPQ"1. Le module 250 stocke le critère de qualité EPQ"1, conjointement avec la valeur de centrage EV1, et envoie sur la ligne 260 une deuxième valeur de centrage EV2. Le module 50" fournit alors un deuxième critère de qualité EPQ"2 stocké à son tour conjointement avec la deuxième valeur de centrage EV2 par le module 250.

Si un cycle d'essais comprend n essais, n critères de qualité EPQ"1, EPQ"2, ...EPQ"n, correspondant chacun à une valeur de centrage EVi différente, sont stockés dans le module 250 à la fin du cycle d'essais. Le module 250 examine alors les n valeurs du critère de qualité stockées et retient la valeur du critère de qualité la plus petite EPQ"x. La valeur EPQ"x correspond à l'erreur d'énergie minimale affectant les porteuses (non démodulées) de signalisation TPS. Le module 250 considère alors la valeur de centrage EVx qui a permis d'obtenir le critère de qualité minimal EPQ"x. La valeur de centrage EVx, correspondant au centrage optimal réalisé dans les modules 206 et 210, est fournie au module 22' par l'intermédiaire d'une ligne 270.

Le module 22' détermine, à l'aide de la valeur de centrage EVx, un paramètre de positionnement optimal de la fenêtre d'analyse de transformée de Fourrier, qu'il transmet au module 20' par l'intermédiaire de la ligne 24'. On notera que l'on peut faire agir le paramètre de positionnement optimal de la fenêtre avec une certaine constante de temps, afin d'éviter des transitions brusques pouvant être la cause d'instabilité.

Le module 22' fait aussi parvenir, par l'intermédiaire de la ligne 24", le signal de commande de centrage CS aux modules 106 et 110. La valeur du signal CS peut être identique à la valeur EVx. Dans ce cas, la ligne 24" peut être couplée à la ligne 270, la valeur EVx étant directement transmise aux modules 106 et 110 sans transiter par le module 22'. La valeur du signal CS peut aussi correspondre à la valeur EVx après un certain délai, ou correspondre à une moyenne de différentes valeurs EVx successives. Bien entendu, le module 250 peut aussi calculer la valeur du signal CS, auquel cas la ligne 24" est reliée à une sortie supplémentaire du module 250, et non plus au module 22'.

On notera que le positionnement de la fenêtre d'analyse FFT et le centrage des filtres contenus dans les modules de correction sont réalisés par des signaux distincts et peuvent être réalisés de manière indépendante. Cela permet notamment de prendre en compte des échos situés en dehors de l'intervalle de garde. On notera en outre que, dans le circuit de la figure 5, on aurait pu représenter dans ce but une ligne supplémentaire reliant le module 22 au module 30.

Après avoir effectué un cycle d'essais, la boucle d'essai 200 peut, après un certain délai ou non, débuter un nouveau cycle d'essais pour optimiser au mieux le positionnement de la fenêtre d'analyse FFT et le centrage des éléments correcteurs. Au cours d'un cycle d'essais, la boucle d'essai peut tester toutes les valeurs possibles du signal de commande de centrage EVi. La boucle d'essai peut aussi, au cours d'un cycle d'essais, n'essayer qu'une ou quelques valeurs de centrage EVi proches de la valeur optimale précédente EVx.

Le mode de réalisation de la figure 7 peut subir de nombreuses modifications et/ou variantes, tant des modules de correction que de la boucle d'essai, sans sortir du cadre de la présente invention.

Par exemple, au lieu d'une seule boucle d'essai 200 réalisant n essais successifs, on peut prévoir plusieurs boucles d'essai en parallèle réalisant chacune un nombre réduit d'essais. Ainsi, on peut placer p boucles d'essai en parallèle, avec p allant de 1 à n, chaque boucle étant prévue pour réaliser p/n essais.

Le mode de réalisation de la figure 7 permet de faire des essais de réglage sans perturber le traitement principal des données. Comme cela a été vu, la boucle d'essai 200 réalise de mêmes fonctions que les modules principaux 106, 110, 112. La boucle d'essai permet de prédire la qualité de la démodulation pour une nouvelle position du filtre, appréciée à l'aide du critère de qualité EPQ, et de régler de façon optimale le positionnement de la fenêtre et le centrage des filtres des modules 106 et 110.

Bien entendu, la présente invention est susceptible de diverses variantes et modifications qui apparaîtront à l'homme de l'art. En particulier, le détail du traitement des porteuses TPS n'est qu'un exemple non-limitatif, et il est à la portée de l'homme de l'art de modifier ce traitement de façon appropriée.

Aussi, dans les exemples de démodulateur des figures 5 et 7, tous les modules peuvent être modifiés ou remplacés par des éléments appropriés. Par exemple, l'entrée E du circuit peut recevoir directement un signal centré sur environ 4,5 MHz. Le convertisseur analogique-numérique peut être extérieur au démodulateur.

De même, les constituants du circuit de la figure 6 et leur fonction peuvent être modifiés de façon appropriée par l'homme de l'art.

Aussi, le critère de qualité peut par exemple être utilisé seulement dans les cas de forte ambiguïté, comme lorsque Tg=Tu/4. Dans les autres cas, les modules 50, respectivement 50', 50", peuvent par exemple être désactivés et/ou le critère de qualité peut être mis à zéro.

Aussi, le module 50, respectivement 50', 50", peut être connecté directement en sortie du module de transformée de Fourier 20, 20', avant le ou les modules de correction, et non après.

Aussi, on a décrit la présente invention dans le cadre de la démodulation COFDM. Cependant, la présente invention n'est pas limitée à ce cadre et tout démodulateur opérant sur des signaux comportant des porteuses de signalisation fait partie du cadre de la présente invention.

On notera en outre que la présente invention a principalement été décrite dans le cadre de la transmission hertzienne de télévision numérique, définie par la norme ETSI EN 300 744, V1.4.1. Cependant, la présente invention n'est ni limitée à cette norme ni à ce domaine et peut être appliquée dans et à tout appareil comportant un démodulateur tel que revendiqué, récepteur de télévision ou non. Par exemple, le démodulateur selon la présente invention peut être utilisé dans un téléphone portable.

## Revendications

1. Démodulateur comprenant :
un circuit de transformée de Fourier rapide (20, 20') d'analyse d'un signal reçu dans une fenêtre (W) correspondant à un symbole, chaque symbole véhiculant plusieurs porteuses modulées en phase et/ou en amplitude, dont certaines sont des porteuses de signalisation (TPS), et
un circuit de positionnement de ladite fenêtre, le circuit de positionnement de ladite fenêtre comprenant un module de traitement des porteuses de signalisation (50, 50") et un module de réglage, de fenêtre (22, 22') couplé au module de traitement des porteuses de signalisation, dans lequel le circuit de positionnement de ladite fenêtre est propre à utiliser les porteuses de signalisation non démodulées et dans lequel le module de traitement des porteuses de signalisation (50, 50") est propre à élaborer un critère de qualité (EPQ, EPQ") à partir des porteuses de signalisation ; et
un ou plusieurs premiers modules de correction (30, 106, 110) couplés au circuit de transformée de Fourier rapide (20, 20') et commandés à partir dudit critère de qualité, dans lequel le circuit de positionnement de ladite fenêtre comprend au moins un circuit d'essais (200) comportant un ou plusieurs deuxièmes modules de correction (206, 210) de même fonction que le ou les premiers modules de correction (106, 110) et couplés au module de traitement des porteuses de signalisation (50"), lui-même couplé à un module de calcul (250) couplé au module de réglage de fenêtre (22') et propre à commander le ou les deuxièmes modules de correction (206, 210).

2. Démodulateur selon la revendication 1, dans lequel le module de traitement des porteuses de signalisation (50, 50', 50") comprend :
un module (58) extracteur des porteuses de signalisation d'un symbole reçu,
un soustracteur (62) propre à soustraire, aux nombres (TPS) représentatifs des porteuses de signalisation extraites, des nombres (TPS') représentatifs d'une séquence de porteuses de signalisation émises dans le symbole,
un premier module de calcul (80) propre à fournir une amplitude associée à la différence fournie par ledit soustracteur,
un premier sommateur (82) propre à fournir, pour chaque symbole, la somme des amplitudes fournies par ledit premier moyen de calcul,
un additionneur (60) propre à additionner, aux nombres (TPS) représentatifs des porteuses de signalisation extraites, les nombres (TPS') représentatifs d'une séquence de porteuses de signalisation émises dans le symbole,
un deuxième module de calcul (70) propre à fournir une amplitude associée à la somme fournie par ledit additionneur, et
un deuxième sommateur (72) propre à fournir, pour chaque symbole, la somme des amplitudes fournies par ledit deuxième moyen de calcul.

3. Démodulateur selon la revendication 2, dans lequel le module de traitement des porteuses de signalisation (50, 50', 50") comprend un troisième module de calcul (90) couplé au premier (82) et deuxième (84) sommateurs propre à fournir ledit critère de qualité (EPQ, EPQ', EPQ"), ledit critère de qualité (EPQ, EPQ', EPQ") étant un nombre représentatif de la somme la plus petite parmi les sommes fournies par les premier et deuxième sommateurs.

4. Démodulateur selon la revendication 3, dans lequel le module de traitement (50, 50', 50") comporte un premier module d'écrêtage (84) couplé au premier sommateur (82) et au troisième module de calcul (90) et un second module d'écrêtage (74) couplé au deuxième sommateur (72) et au troisième module de calcul (90).

5. Démodulateur selon l'une quelconque des revendications 1 à 4, dans lequel le module de traitement des porteuses de signalisation (50, 50', 50") comprend :
un module (65) de fourniture de N "1" consécutifs, N correspondant au nombre de porteuses présentes dans un symbole,
un module (67) de modification des "1" fournis par le module (65) de fourniture de "1", pour remplacer chaque "1" correspondant à la position d'une porteuse de signalisation dans le symbole par un nombre représentatif de la porteuse de signalisation, la première porteuse de signalisation correspondant à un "1", et
un module (69) d'extraction de nombres correspondant à l'emplacement des porteuses de signalisation dans le symbole, pour fournir des nombres (TPS') représentatifs d'une séquence de porteuses de signalisation émises dans le symbole.

6. Procédé de démodulation comprenant les étapes suivantes :
transformer par transformation de Fourier rapide analysant un signal reçu dans une fenêtre (W) correspondant à un symbole, chaque symbole véhiculant plusieurs porteuses modulées en phase et/ou en amplitude, dont certaines sont des porteuses de signalisation (TPS), et
positionner ladite fenêtre, le positionnement de ladite fenêtre étant propre à utiliser les porteuses de signalisation non démodulées et dans lequel le positionnement inclut le traitement des porteuses de signalisation (50, 50") en :
extrayant les porteuses de signalisation d'un symbole reçu,
soustrayant des nombres (TPS) représentatifs des porteuses de signalisation extraites, des nombres (TPS') représentatifs d'une séquence de porteuses de signalisation émises dans le symbole,
calculant une première amplitude associée à la différence fournie par la soustraction,
fournissant, pour chaque symbole, la somme des premières amplitudes,
additionnant, aux nombres (TPS) représentatifs des porteuses de signalisation extraites, les nombres (TPS') représentatifs d'une séquence de porteuses de signalisation émises dans le symbole,
calculant une seconde amplitude associée à la somme fournie par ladite addition, et
fournissant, pour chaque symbole, la somme des secondes amplitudes.

## Claims

1. A demodulator comprising:
a fast Fourier transform circuit (20, 20') analyzing a received signal in a window (W) corresponding to a symbol, each symbol conveying several phase- and/or amplitude-modulated carriers, some of which are signaling carriers (TPS), and
a circuit for positioning said window, the circuit for positioning said window comprising a unit (50, 50") for processing the signaling carriers and a window setting unit (22, 22') coupled to the processing unit of the signaling carriers, wherein the circuit for positioning said window is able to use the non demodulated signaling carriers, wherein the processing unit of the signaling carriers (50, 50") is able to determine a quality criterion (EPQ, EPQ") from the signaling carriers; and
one or more first correction units (30, 106, 110), coupled to the fast Fourier transform circuit (20, 20'), and controlled using said quality criterion, wherein the circuit for positioning said window comprises at least one test circuit (200) including one or more second correction units (206, 210) having the same function as the first correction unit or units (106, 110), and coupled to the processing circuit (50"), itself coupled to a calculation unit (250), coupled to the window setting unit (22') and able to control the second correction unit or units (206, 210).

2. The demodulator of claim 1, wherein the processing unit of the signaling carriers (50, 50', 50") comprises:
a unit (58) for extracting the signaling carriers from a received symbol,
a subtractor (62) for subtracting, to the numbers (TPS) representative of the extracted signaling carriers, numbers (TPS') representative of a sequence of signaling carriers transmitted in the symbol,
a first calculation unit (80) for providing an amplitude associated with the difference provided by said subtractor,
a first adder (82) for providing, for each symbol, the sum of the amplitudes provided by said first calculation means,
an adder (60) for adding to the numbers (TPS) representative of the extracted signaling carriers, numbers (TPS') representative of a sequence of signaling carriers transmitted in the symbol,
a second calculation unit (70) for providing an amplitude associated with the sum provided by said adder, and
a second adder (72) for providing, for each symbol, the sum of the amplitudes provided by said second calculation means.

3. The demodulator of claim 2, wherein the processing unit of the signaling carriers (50, 50', 50") comprises a third calculation unit (90) coupled to the first (82) and second (84) adders for providing said quality criterion (EPQ, EPQ', EPQ"), said quality criterion (EPQ, EPQ', EPQ") being a number representative of the smallest sum among the sums provided by the first and second adders.

4. The demodulator of claim 3, wherein the processing unit of the signaling carriers (50, 50', 50") comprises a first clipping unit (84) coupled to the first adder (82) and to the third calculation unit (90) and a second clipping unit (74) coupled to the second adder (72) and to the third calculation unit (90).

5. The demodulator of any of claims 1 to 4, wherein the processing unit of the signaling carriers (50, 50', 50") comprises:
a unit (65) for providing N consecutive "1s", N corresponding to the number of carriers present in a symbol,
a unit (67) for modifying the "1s" provided by the unit (65) for providing the "1s", for replacing each "1" corresponding to the position of a signaling carrier in the symbol with a number representative of the signaling carrier, the first signaling carrier corresponding to a "1", and
a unit (69) for extracting numbers corresponding to the location of the signaling carriers in the symbol, to provide numbers (TPS') representative of a sequence of signaling carriers transmitted in the symbol.

6. A demodulation method comprising the following steps:
transforming by fast Fourier transform analyzing a received signal in a window (W) corresponding to a symbol, each symbol conveying several phase- and/or amplitude-modulated carriers, some of which are signaling carriers (TPS), and
positioning of said window, the step of positioning said window being able to use the non demodulated signaling carriers and wherein the positioning step includes the processing of the signaling carriers (50, 50") by:
extracting the signaling carriers from a received symbol,
subtracting, to the numbers (TPS) representative of the extracted signaling carriers, numbers (TPS') representative of a sequence of signaling carriers transmitted in the symbol,
calculating a first amplitude associated with the difference provided by the subtracting step,
providing, for each symbol, the sum of the first amplitudes,
adding to the numbers (TPS) representative of the extracted signaling carriers, numbers (TPS') representative of a sequence of signaling carriers transmitted in the symbol,
calculating a second amplitude associated with the sum provided by said adding step, and
providing, for each symbol, the sum of the second amplitudes.

## Patentansprüche

1. Ein Demodulator, der Folgendes aufweist:
einen Fast-Fourier-Transformationsschaltkreis (20, 20'), der ein empfangenes Signal in einem Fenster (W), das einem Symbol entspricht, analysiert wobei jedes Symbol mehrere phasen- und/oder amplitudenmodulierte Träger überträgt, von denen einige Signalträger (TPS) sind, und
einen Schaltkreis zum Positionieren des Fensters, wobei der Schaltkreis zum Positionieren des Fensters eine Einheit (50, 50") zum Verarbeiten der Signalträger und eine Fenstersetzeinheit (22, 22') aufweist, die mit der Verarbeitungseinheit der Signalträger verbunden ist, wobei der Schaltkreis zum Positionieren des Fensters geeignet ist die nicht demodulierten Signalträger zu verwenden, wobei die Verarbeitungseinheit der Signalträger (50, 50") geeignet ist ein Qualitätskriterium (EPQ, EPQ") von den Signalträgern zu bestimmen; und
eine oder mehrere erste Korrektureinheiten (30, 106, 110), die mit dem Fast-Fourier-Transformationsschaltkreis (20, 20') verbunden sind, und gesteuert sind durch die Verwendung des Qualitätskriteriums, wobei der Schaltkreis zum Positionieren des Fensters wenigstens einen Testschaltkreis (200) aufweist, der einen oder mehrere zweite Korrektureinheiten (206, 210) aufweist, die dieselbe Funktion wie die erste Korrektureinheit oder Einheiten (106, 110) aufweist, und mit der Verarbeitungseinheit (50") verbunden ist, die wiederum mit einer Berechnungseinheit (250) verbunden ist, die mit der Fenstersetzeinheit (22') verbunden ist und geeignet ist die zweite Korrektureinheit oder Einheiten (206, 210) zu Steuern.

2. Der Demodulator nach Anspruch 1, wobei die Verarbeitungseinheit der Signalträger (50, 50', 50") Folgendes aufweist:
eine Einheit (58) zum Extrahieren der Signalträger aus dem empfangenen Symbol,
einen Subtraktor (62) zum Subtrahieren von Zahlen (TPS'), die repräsentativ für eine Sequenz von Signalträgern sind, die in dem Symbol gesendet werden, von Zahlen (TPS), die repräsentativ sind für die extrahierten Signalträger,
eine erste Berechnungseinheit (80) zum Bereitstellen einer Amplitude, die mit der Differenz assoziiert ist, die von dem Subtraktor bereitgestellt wird,
einen ersten Addierer (82) zum Bereitstellen, für jedes Symbol, der Summe der Amplituden, die von den ersten Berechnungsmitteln bereitgestellt wurden,
einen Addierer (60) zum Addieren zu den Zahlen (TPS), die repräsentativ sind für die extrahierten Signalträger, Zahlen (TPS'), die repräsentativ für eine Sequenz von Signalträgern sind, die in dem Symbol gesendet werden,
eine zweite Berechnungseinheit (70) zum Bereitstellen einer Amplitude, die mit der Summe, die von dem Addierer bereitgestellt wird, assoziiert ist, und
einen zweiten Addierer (72) zum Bereitstellen, für jedes Symbol, der Summe der Amplituden, die von den zweiten Berechnungsmitteln bereitgestellt wurden.

3. Der Demodulator nach Anspruch 2, wobei die Verarbeitungseinheit der Signalträger (50, 50', 50") eine dritte Berechungseinheit (90) aufweist, die mit dem ersten (82) und dem zweiten (84) Addierer verbunden ist, um das Qualitätskriterium (EPQ, EPQ', EPQ") bereitzustellen, wobei das Qualitätskriterium (EPQ, EPQ', EPQ") eine Zahl ist, die repräsentativ für die kleinste Summe unter den Summen ist, die von dem ersten und dem zweiten Addierer bereitgestellt werden.

4. Der Demodulator nach Anspruch 3, wobei die Verarbeitungseinheit der Signalträger (50, 50', 50") eine erste Abtrenneinheit (84) aufweist, die mit dem ersten Addierer (82) und der dritten Berechnungseinheit (90) verbunden ist und eine zweite Abtrenneinheit (74) aufweist, die mit dem zweiten Addierer (72) und der dritten Berechnungseinheit (90) verbunden ist.

5. Der Demodulator nach einem der Ansprüche 1 bis 4, wobei die Verarbeitungseinheit der Signalträger (50, 50', 50") Folgendes aufweist:
eine Einheit (65) zum Bereitstellen von N aufeinanderfolgenden "1s", wobei N der Zahl von Trägern entspricht, die in einem Symbol anwesend sind,
eine Einheit (67) zum Modifizieren der "1s", die durch die Einheit (65) bereitgestellt werden, zum Bereitstellen der "1s", zum Ersetzen jeder "1", die der Position eines Signalträgers in dem Symbol entspricht, mit einer Zahl, die repräsentativ ist für den Signalträger, wobei der erste Signalträger einer "1" entspricht, und
eine Einheit (69) zum Extrahieren von Zahlen, die der Position der Signalträger in dem Symbol entsprechen, um Zahlen (TPS') bereitzustellen, die repräsentativ sind für eine Sequenz von Signalträgern, die in dem Symbol gesendet werden.

6. Ein Demodulationsverfahren, das die folgenden Schritte aufweist:
Transformieren eines empfangenen Signals durch Fast-Fourier-Transformationsanalyse in einem Fenster (W), das einem Symbol entspricht, wobei jedes Symbol mehrere phasen- und/oder amplitudenmodulierte Träger überträgt, von denen einige Signalträger (TPS) sind, und
Positionieren des Fensters, wobei der Schritt des Positionierens des Fensters geeignet ist, die nicht demodulierten Signalträger zu verwenden, und wobei der Schritt des Positionierens das Verarbeiten der Signalträger (50, 50") beinhaltet, durch das:
Extrahieren der Signalträger aus einem empfangenen Symbol,
Subtrahieren von Zahlen (TPS'), die repräsentativ für eine Sequenz von Signalträgern sind, die in dem Symbol gesendet werden, von Zahlen (TPS), die repräsentativ sind für die extrahierten Signalträger,
Berechnen einer ersten Amplitude, die mit der Differenz assoziiert ist, die von dem Subtrahierschritt bereitgestellt wird,
Bereitstellen, für jedes Symbol, der Summe der ersten Amplituden,
Addieren zu den Zahlen (TPS), die repräsentativ sind für die extrahierten Signalträger, Zahlen (TPS'), die repräsentativ für eine Sequenz von Signalträgern sind, die in dem Symbol gesendet werden,
Berechnen einer zweiten Amplitude, die mit der Summe, die von dem Addierschritt bereitgestellt wird, assoziiert ist, und
Bereitstellen, für jedes Symbol, der Summe der zweiten Amplituden.
